(19) Europäisches Patentamt
European Patent Office
Office européen des brevets

(11) Publication number: **0 032 893**
**B1**

(12) **EUROPEAN PATENT SPECIFICATION**

(45) Date of publication of patent specification: **21.03.84**

(51) Int. Cl.³: **F 28 D 7/10**

(21) Application number: **79901438.6**

(22) Date of filing: **11.07.79**

(86) International application number:
**PCT/US79/00485**

(87) International publication number:
**WO 81/00297 05.02.81 Gazette 81/4**

# (54) APPARATUS WITH EXPANDABLE TUBE BUNDLE.

(43) Date of publication of application:
**05.08.81 Bulletin 81/31**

(45) Publication of the grant of the patent:
**21.03.84 Bulletin 84/12**

(84) Designated Contracting States:
**CH DE FR GB**

(56) References cited:
CH - A - 451 218
DE - A - 1 932 027
FR - A - 2 358 910
US - A - 2 644 675
US - A - 3 363 680
US - A - 3 419 069
US - A - 3 422 008
US - A - 3 438 434
US - A - 3 526 274
US - A - 3 858 646
US - A - 4 026 783
US - A - 4 136 734

(73) Proprietor: **E.I. DU PONT DE NEMOURS AND COMPANY**
**Legal Department 1007 Market Street**
**Wilmington Delaware 19898 (US)**

(72) Inventor: **REITZ, Charles Frederick**
**5908 Valley Way**
**Centerville, DE 19807 (US)**

(74) Representative: **Abitz, Walter, Dr.-Ing. et al,**
**Abitz, Morf, Gritschneder P.O. Box 86 01 09**
**D-8000 München 86 (DE)**

**EP 0 032 893 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Apparatus with expandable tube bundle

## Technical field

This invention relates to a heat exchanger having hollow, flexible tubular units for fluids to pass through and a housing or shell surrounding the tubular units so that one fluid can be passed through the apparatus between the shell and the tubular units and another fluid can be passed through the tubular units with the flexible tubes in a twist configuration with respect to the individual tubes from one end to the other end.

## Background art

Heat exchanger apparatuses with flexible tubes usually possess tapes and screen baffles to keep the flexible tubes from rubbing against the housing around said tubes and to effect a suitable heat transfer rate. At high fluid flows the tubes tear free of said tapes thereby in some cases requiring thicker tube walls because of the tube welds. The thicker walls reduce heat transfer rate. Said tapes and baffle also tend to filter out dirt in sedimentary deposits that is very difficult and in some cases impossible to remove.

Such flexible tube heat exchangers do not attain maximum heat transfer due to the tendency of the flexible tubes to remain parallel to each other thereby permitting the tubes to occupy less than all of the available volume within the housing of said heat exchanger. This provides a bypass route for the fluid passing through the shell side of the exchanger.

In the operation of conventional heat exchangers equipped with either rigid tubular elements or flexible tubular elements, the shell side of the tubular elements tend to build up or cake with solid material from the fluid, e.g., river water, used as the heat exchange medium, thereby decreasing the heat exchange efficiency and interfering with the flow patterns in the exchanger. Most exchangers therefore have to be shut down frequently to remove the solid material before the efficiency of the heat exchanger falls below some desired minimum. The same buildup can occur when the shell side of the tubular elements contains a fluid containing material which can be separated out as a solid during its presence in the heat exchanger.

A heat exchanger is known in accordance with the prior art portion of claim 1 (US—A—3,858,646) in which the tubular bundle has a length equal to that of the housing, the tubular elements in each bundle have the same length and only a very low twist and the spacers merely surround some of the tubular elements and occupy only a small part of the internal diameter of the housing. With a heat exchanger of this type, there is a tendency to build-up of solid particles contained in one of the heat transfer fluids.

The invention as claimed in claim 1 solves the problem of how to design a heat exchanger with which build-up of sediment between the tubes is avoided, even if, e.g., brackish water is used as a heat transfer medium.

The advantages offered by the invention are mainly that the tubular elements are capable of flexing and moving and cannot lie parallel to one another, thereby reducing build-up of solid particles thereon.

Thus, brackish water may be used as a heat transfer medium without problems in build-up of sediment between the tubes. The spacers are used to effect more efficient flow patterns than when the tubes are held by conventional spacers and tapes. The absence of tape welds makes it possible to use thin walled tubes to attain maximum heat transfer rates in heat exchangers and more efficient ion transfer in ion exchangers. The use of spacers instead of tapes also causes a flow pattern of the fluid such that sediment deposits from the fluid tend to be washed through the exchanger.

The preparation of conventional flexible tube apparatus for use as heat exchangers is known in the art.

The tubular elements are generally formed of a suitable thermoplastic polymer, preferably of a suitable polyfluorinated plastic material. Particularly adaptable are polymers and copolymers of tetrafluoroethylene sold under the trade name Teflon® by E. I. du Pont de Nemours and Company and polypropylene. Representative examples of such polyfluorinated thermoplastic polymers include polytetrafluoroethylene modified with polyhexafluoropropylene, copolymers of tetrafluoroethylene and perfluoropropylvinyl ether, tetrafluoroethylene, ethylene and hexafluoroacetone (Tefzel® manufactured by E. I. du Pont de Nemours and Company) and fluorinated ion exchange polymers. However, other polymers may be used without departing from the spirit of the invention. Any organic polymeric compositions that are thermoplastic, possess suitable compatability with the fluids handled, possess adequate properties such as strength at the desired operating conditions and further possess adequate thermal conductivity for the desired use may also be used. Representative organic polymeric compositions also include polymers of aliphatic olefins, e.g., homopolymers and copolymers of ethylene, propylene, butene-1, pentene-1, hexene-1, octene-1, decene-1, butadiene, styrene; polymers of vinyl halides, e.g., vinyl chloride, vinyl fluoride, vinylidene fluoride; polymers of amides, e.g., hexamethylene adipamide, hexamethylene, sebacamide, caprolactam, etc.; polyacetals, e.g., polyoxymethylene,

formaldehyde copolymers; polyaromatic ethers, e.g., polyphenylene oxide; polyurethanes; polyesters, e.g., polycarbonates, polyacrylates, polyalkylene dicarboxylates; chlorinated polyethers, etc.

The fluorinated ion exchange polymers possess pendant side chains containing sulfonyl groups attached to carbon atoms having at least one fluorine atom connected thereto.

The fluorinated ion exchange polymers are prepared from monomers which are fluorinated or fluorine substituted vinyl compounds. The polymers are made from at least two monomers with at least one of the monomers coming from each of the two groups described below. The first group is fluorinated vinyl compounds such as vinyl fluoride, hexafluoropropylene, vinylidene fluoride, trifluoroethylene chlorotrifluoroethylene, perfluoro(alkyl vinyl ether), tetrafluoroethylene and mixtures thereof.

The second group is the sulfonyl-containing monomers containing the precursor $—SO_2F$ or $—SO_2Cl$. One example of such a comonomer $CF_2{=}CFSO_2F$. Additional examples can be represented by the general formula $CF_2{=}CFR_fSO_2F$ wherein $R_f$ is a bifunctional perfluorinated radical comprising 2—8 carbon atoms. The particular chemical content or structure of the radical linking the sulfonyl group to the copolymer chain is not critical but such must have a fluorine atom attached to the carbon atoms to which is attached the sulfonyl group. If the sulfonyl group is attached directly to the chain, the carbon in the chain to which it is attached must have a fluorine atom attached to it. Other atoms connected to this carbon can include fluorine, chlorine or hydrogen. The $R_f$ radical of the formula above can be either branched or unbranched, i.e., straight-chained and can have one or more ether linkages. It is preferred that the vinyl radical in this group of sulfonyl fluoride containing comonomers be joined to the $R_f$ group through an ether linkage, i.e., that the comonomer be of the formula $CF_2{=}CFOR_fSO_2F$. Illustrative of such sulfonyl fluoride containing comonomers are

$$CF_2{=}CFOCF_2CF_2SO_2F,$$

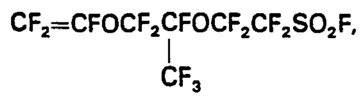

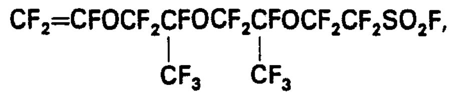

$$CF_2{=}CFCF_2CF_2SO_2F, \text{ and}$$

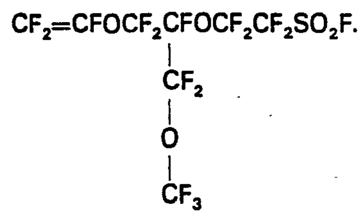

The most preferred sulfonyl fluoride containing comonomer is perfluoro(3,6-dioxa-4-methyl-7-octenesulfonyl fluoride),

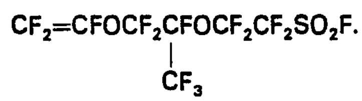

The preparation of tetrafluoroethylene polymers and copolymers thereof with other fluorocarbons or hydrocarbons are well known in the art as are the other polymeric compositions.

The tube bundles of the apparatus of this invention are prepared from tubes being of various lengths that range from 8,3 to 83,3 mm per meter (0.1—1.0 inch per foot) of bundle length. These tube bundles can conveniently be prepared by the use of a trough having a bend that is generally at least 5°, preferably 10—15°, of any desired length, into which tubular elements are laid. Due to this bend in the trough, the tubes laid therein will vary in length from the adjacent tubes. The tubes are then cut to conform to the desired length of the bundles by a vertical cutting of both ends of the tubes. The tube ends are then sealed together with heat after the desired number and type of spacers have been placed in the trough so that the tubular elements pass through the holes in the spacer as desired.

Spacers are used to help keep the tubular elements from nesting by more evenly distributing the tubular elements within the housing walls.

The spacers are placed 15 to 75 cm apart. This depends on the particular system being used. The design of the spacer so that up to 80% of the area is made up of holes for the tubular elements to pass through is unique and causes the flow of fluid to avoid parallel flow by arranging the opening that amounts to 20% of the area of the spacer to be turned at least 45° from the adjacent spacer. There can

be from 1—600 holes in the area amounting to up to 80% of the total spacer area. Each hole is capable of having 1—100 tubular elements pass through. The remaining area of 20% or more of the spacer is one opening through which from 1—100 tubular elements can pass. The passage of some fluid through the spacer holes between the circumference of the holes and the outer surface of the tubular elements permits minimal parallel flow of the fluid, but results in a reduction in the wear of the tubular elements. The turning of the spacers with respect to the adjacent spacer can be from 45—315°, however, they are preferably turned from 90—270°, and most preferably 180° from the adjacent spacer to prevent parallel flow of the fluid on the shell side of the exchanger. This arrangement of the spacers directs the majority flow of fluid on the shell side of the tubular elements through the open sections thereby creating a cross flow that improves the heat transfer rate across the tubes. Some fluid passes around the tubes between the tubes and the hole through which they pass but the majority passes through the open sections that are at least 45° turned from the previous spacer thereby preventing channeling. The majority flow is a cross flow with some parallel flow occurring around the tubes in the holes.

The spacers of this invention are generally circular in shape and sized to fit tightly against the inside circumference of the housing in such a manner that the fluid in the shell side of the exchanger will only minimally flow around the spacers.

The tubes are pulled from creel, straightened and threaded through the spacers. One end of the tubes is fused together and to a connector ring that surrounds the fused tubes. The tubes are then bowed by laying them in a trough with a bend (angle of bend disclosed herein) with the spacers in place and the second end of the tubes is fused together and to a connector ring that surrounds the fused tubes. The fusing of the tubular elements at the ends can be performed one one end before subjecting them to the desired bend followed by twisting and fusing the other end or both ends may be fused after they have been subjected to the desired bend and twist. Both ends may be fused before any twist. In this case, the tube bundle is twisted when the ends are anchored to the housing means.

The spacers are anchored in the desired position by the use of a rod running the length of the tube bundle through each spacer at its outer edge and fused to the other tubes and to a sheath or header ring as a tubular element is. The rod is generally of plastic material (e.g., Teflon®). The polymeric materials described above may also be used to make said rods. The ends of the rods are sealed with the honeycomb of tubular elements to anchor the rods at both ends. There are four rods anchoring the spacers in each bundle, said rods spaced about 90° apart at the outer circumference of the tubular elements. The rod size is generally of the same outside diameter as the tubes. However, larger outside diameter rods can also be used.

The apparatus of this invention results in three improvements over conventional apparatuses. These are (1) reduced buildup of sediment on the shell side of the tubes, (2) reduced tube leaks (due to absence of tapes), (3) increased overall heat transfer due to lower velocity of fluids on the shell side without sedimentary deposits and reduced nesting of the tubes. The three critical requirements in achieving the above improvements are the variation in length of the tubes, the twist set of the tubes, the spacers and bowed tubes. The bowed tubes are attained with the use of an excessive tube bundle length for the housing so that the tube ends must be pushed in toward each end of the housing before the bundles are locked to the housing in fluid tight arrangement. Thus, when the twisted tube bundle is inserted into the housing, the tube bundle ends are pushed into the housing before anchoring the terminal portions of the tube bundle in fluid tight arrangement with the terminal portion of the housing means bowing the tubes outwardly toward the housing. This excess length of the bundle of tubes amounts to 0.5—5% more than the housing length.

The terminal portions of the bundle of tubular elements are sealed in an arrangement within an annular member that cooperates with the lateral dimension securing means. The lateral dimension securing means and the means for attaching said securing means to the housing are known in the art. Any conventional means for accomplishing this may be used.

What is meant by a conventional flexible tube apparatus is an apparatus known in the art as heat exchanger which has flexible, relatively small diameter, thin walled, hollow, polymeric tubular elements. The preferred tube sizes of this invention are from 3,175 mm O.D. to 7,75 mm O.D.

In operation the apparatus of this invention may be used to exchange heat between two fluids. The fluids, e.g., may be sulfuric acid of different strengths and different temperatures. A process might involve liquids inside the tubes and gas on the shell side, e.g., sulfur dioxide gas on the shell side and water in the tubes. The apparatuses of this invention are most often utilized to exchange heat from one fluid to another fluid where corrosiveness of one fluid or both is a factor to be considered.

It is important that the cleaner fluid being used be the fluid inside the tubes and the one not as clean be the fluid outside the tubes. The flow of heat from the shell side of the tubes into the tubes or from the inside of the tubes toward the shell side also tends to cause the tubes to bow.

The apparatus of this invention when the tubular elements are fabricated from fluorinated ion exchange polymers with sulfonyl groups may be used to separate metals from plating solutions with reduced build up of sediment on the shell side of the tubular elements from the plating solutions.

The housing means may be fabricated from steel or other metals and it may be uncoated or coated or lined with a polymeric material where corrosiveness is a factor. The polymer used for this

coating may be selected from the polymers described herein but is not intended to be limited to said polymers. Thus, coating or lining may be of polymers that are not thermoplastic.

Brief description of the drawings

Figure 1 is an isometric illustration of a tube bundle with a twist configuration also showing the rods that anchor the spacers in place.

Figure 2 is a cross section of the tube bundle of Figure 1 at a spacer showing the openings in the spacer and its position relative to an adjacent spacer.

Figure 3 is a cross section of the tube bundle of Figure 1 at the spacer adjacent to the spacer in Figure 2 showing the openings in the spacer and its position relative to an adjacent spacer.

Referring now to Figures 2 and 3 spacer *2* is shown with holes 10 through which a plurality of tubular elements pass making up as much as 80% of the area of the spacer. An opening *11* that amounts to 20% or more of the surface area of the spacer is provided for a plurality of tubular elements. An identical spacer *3* is shown rotated 180° with respect to identical spacers *2*.

Referring now to Figure 1, rods *7* and *8* are fused into the honeycombed ends *6* of the tubular elements in the same manner as an individual tubular element. Rod *7* extends through holes on spacers *2, 3, 4* and *5* and tie into the other terminal portion of the tubular elements in the same manner as an individual tubular element. Rod *8* also extends through the spacers and is fused to both ends of the bundle but is located about 90° from rod *7*. Two other rods spaced 90° apart and 90° from other rods make up a total of four rods which anchor the spacers. The spacers are located at intervals defined herein between the terminal portions of the tube bundle shown and are each rotated 180° with respect to the adjacent spacer. The tube bundle and rods are enclosed within a housing means. The tubular elements of the bundle are in a twist configuration which, for purposes of illustration, are intended to amount to 360°.

The plurality of tubular elements making up the bundle *1* are sealed together at both ends so that the individual tubes are parallel to each other and packed together with a minimum of space between them to form a "honeycomb" effect *6*. A sheath or header ring *9* made up of polymer that can be the same as that of the tubular elements is bonded by fusing the sheath around the honeycomb at tubes. The finished bond leaves no passageway between the tube walls and sheath or between the tube walls themselves.

Example 1

An apparatus with the features of the present invention was prepared with tubes of 6,35 mm O.D. of a copolymer of tetrafluoroethylene and hexafluoropropylene (Teflon® FEP 160 made by E. I. du Pont de Nemours and Company) that varied in length from 4,88 m to 5,08 mm and arranged in a 10° per 30 cm of bundle length twist and in a housing such that there will be a 2% excess in length of the tubes. The spacers were 45,7 cm apart with holes large enough for 80 tubes per each hole. Raw river water from the James River at Richmond, Virginia was fed to the shell side of the apparatus and steam was fed to the inside of the tubes and data taken to calculate the overall heat transfer coefficient Uo. The following data represent average data from four runs:

| Steam | | Water flow | Overall |
|---|---|---|---|
| Inlet temp °C | Exit temp °C | l/mm | coefficient Uo(W/m² °C) |
| 110 | 104,4 | 378 | 216 |
| 110 | 104,4 | 567 | 238 |
| 110 | 104,4 | 756 | 250 |
| 110 | 104,4 | 756 | 250 |

After six months of operation, there was essentially no buildup of salt or sediment on the shell side.

Comparison Example A

The procedure of Example 1 was followed except that a conventional apparatus with 6,4 mm O.D. of the same Teflon® FEP 160 tubes 3,35 m in length with welded tapes was used. The raw river water and steam flows were essentially parallel and gave the following overall heat transfer coefficient in a series of 3 runs:

| Steam | | Water flow | Overall |
|---|---|---|---|
| Inlet temp °C | Exit temp °C | l/mm | coefficient Uo* |
| 110 | 104,4 | 378 | 193 |
| 110 | 104,4 | 567 | 204 |
| 110 | 104,4 | 756 | 227 |

*Uo=W/m² area/°C differential temperature

Comparative Example B

The apparatus of Comparative Example A was placed in commercial operations with steam and water at the same commercial facility with the same river water. After six months of operation, the shell side was plugged solid with silt.

Comparative Example C

A 183 cm (6 feet) long apparatus with a shell 20,3 cm in I.D. and 525 tubes 6,35 mm in O.D, 0,6 mm inch wall thickness, of the same Teflon® FEP 160 of Example 1 making up a bundle of tubes with welded tapes to hold the tubes with the screen baffle. The apparatus was connected so that a slurry of sand in water could be recirculated through the shell side of said heat exchanger. After 16 hours of recirculating of the sand slurry, the exchanger had 28 kg of sand deposited therein. After six flow interruptions, 13 kg of that amount of sand were freed.

Example 2

The procedure of Comparative Example C was followed except the apparatus was one constructed according to the disclosure in the present application of the same size, number of tubes, diameter and length as in Comparative Example C. One end of the tube bundle was honeycombed (tubes fused to each other and to a collector ring surrounding the honeycomb). The tubes were slipped through three spacers spaced approximately 46 cm apart, said spacers containing six circular holes in an area making up less than 80% of the cross sectional area of the spacer and one opening making up at least 20% of the cross sectional area. The spacers were rotated 180° from the adjacent spacer. The tube bundle was bent 8° in a trough having a 66 cm radius. The other end of the tubes in the bundle was honeycombed while the tube bundle was in this configuration. The longest tube was three inches longer than the shortest tube and the tube bundle length was 7,6 cm longer than the shell. The tube bundle was pulled through the shell and compressed and twisted 15° per 30 cm of tube bundle length to fit the shell and locked into place. After 16 hours of recirculation of the same slurry makeup used in Comparative Example C, 7,25 kg of the sand were deposited in the apparatus. One interruption of the recirculation freed 4,53 kg of sand. After five additional flow interruptions, 1,8 kg of additional sand were freed.

Tests were conducted with an apparatus of the present invention and another apparatus of the same size except that the spacers of the present invention were not used. The apparatuses were compared in a vertical position and in a horizontal position.

Eample 3

The apparatus of this invention comprised a shell 15,2 cm in diameter and 1,8 m long. A tube bundle containing 106 tubes of 6,3 mm O.D. with a wall thickness of 0,6 mm inch was honeycombed at one end. The tubes were slipped through three spacers and the bundle was then laid in a trough with a bend such that the tube lengths varied 10 cm from the shortest to the longest. The tube bundle was twisted 20° per 30 cm of tube bundle length and the other end was honeycombed. The tube bundle length was one inch longer than the shell. The spacers included holes 2,2 cm in diameter in a triangular arrangement over an area amounting to 80% of the area of the spacer and over the area covering 20% of the area of the spacer was a single noncircular opening. There were 20 tubes passing through the noncircular opening. Six and seven tubes in some cases passed through each of the 2,2 cm holes. The spacers were rotated 180° from the adjacent spacer. The tube ends were pushed together to fit the shell. The spacers were 45,7 cm apart.

Hot water was circulated inside the tubes and cold water on the shell side and then this arrangement was reversed. An overall heat transfer was calculated from data obtained with the apparatus in a vertical position and a horizontal position. The data obtained is summarized below:

| | |
|---|---|
| Water temp shell side | =82°C |
| Water temp inside tubes (AV) | =42°C |
| Uo (vertical position) | =244 |
| Uo (horizontal position) | =227 |
| Water temp shell side | =42°C |
| Water temp inside tubes (AV) | =82°C |
| Uo (vertical position) | =250 |
| Uo (horizontal position) | =227 |

Comparative Example D

The apparatus of Example 3 was made except that no spacers were used and the apparatus tested as in Example 3. The following data was obtained:

| | |
|---|---|
| Water temp shell side | =82°C |
| Water temp inside tubes (AV) | =42°C |
| Uo (vertical position) | =170 |

| | |
|---|---|
| Uo (horizontal position) | =125 |
| Water temp shell side | =42°C |
| Water temp inside tubes (AV) | =82° |
| Uo (vertical position) | =210 |
| Uo (horizontal position) | =153 |

Comparative Example E

The apparatus of Example 3 was made except that the twist was 5° per 30 cm of tube bundle and no spacers were used and the procedure of Example 3 was followed. The following data was obtained:

| | |
|---|---|
| Water temp shell side | =77°C |
| Water temp inside tubes (AV) | =40,5°C |
| Uo (vertical position) | =159 |
| Uo (horizontal position) | =136 |

The above data indicates that although the present invention gives better heat transfer in the vertical position, either the vertical or horizontal position results in better heat transfer than when no spacers are used.

Best mode

Example 1 represents the best mode of operation.

Industrial applicability

The apparatus of the present invention can be used where fluid heat exchange is required and more especially where these fluids are corrosive in nature. The apparatus of the present invention can also be used in applications where ion exchange or removal of ions from streams is required when the tubular units are fabricated from ion exchange material.

**Claims**

1. Heat exchanger comprising

a housing having inlet and outlet means;
an elongated bundle of a plurality of flexible, relatively small diameter, thin walled, hollow, polymeric, tubular elements arranged in a twisted configuration, extending the length of the housing and having open terminal portions;
a lateral dimension securing means for the bundle cooperating with the terminal portions and
spacers for the tubular elements defining an area for 1 to 600 holes (10) through which a portion of the tubular elements pass,
the housing entirely surrounding the tubular elements, defining a zone for fluid passage around the bundle, having means for securing itself to the lateral dimension securing means in fluid tight arrangement therewith and having its length selected and determined by the length of the bundle;

characterized by:

the tubular bundle (1) having a length of 0.5 to 5% greater than the housing length;
the tubular elements in each bundle (1) being of various lengths that range from 8.3 to 83.3 mm per meter of bundle length;
the twist of the tubular elements amounting from 1 to 25° per 30 cm of bundle length as measured by the angle of turn that the tubes in one terminal portion of the bundle (1) are to the tubes in the other terminal portion;
the spacers (2, 3, 4, 5) being located at intervals from 15 to 75 cm apart and being rotated from 45 to 315° with respect to the adjacent spacers and
the tubular elements passing through holes in the circular spacers (2, 3, 4, 5) having an area of up to 80% of the inside cross sectional area of the housing and defining an area of 20% or more of the inside cross sectional area of the housing defining one opening (11) through which a portion of the tubular elements pass, the number of tubes passing through each hole (10) or the opening (11) ranging from 1 to 100.

2. The heat exchanger apparatus of Claim 1 wherein the twist is 6—15° per 30 cm of bundle length.

3. The heat exchanger apparatus of Claim 1 wherein the rotation of spacers is 90—270°.

4. The heat exchanger apparatus of Claim 1 wherein the rotation of spacers is 180°.

5. The heat exchanger apparatus of Claim 1 having tubular elements of fluorinated ion exchange polymer.

6. The heat exchanger apparatus of Claim 5 wherein the fluorinated ion exchange polymer contains sulfonyl groups.

7. The heat exchanger apparatus of Claim 1 wherein the variation in length is from 5 to 15 mm per 30 cm of bundle length.

8. The heat exchanger apparatus of Claim 1 wherein the tube bundle length is 1—3% greater than the housing length.

9. The heat exchanger apparatus of Claim 1 wherein the spacers are located 46 to 61 cm apart.

10. A process for exchanging heat with fluids of different temperatures using the apparatus of Claim 1.

**Revendications**

1. Echangeur thermique comprenant:

— un boitier présentant des moyens d'entrée et de sortie;
— un faisceau allongé de multiples éléments tubulaires polymères flexibles creux, à paroi mince, de diamètre relativement petit, disposés en une configuration tordue, s'étendant sur la longueur du boitier et présentant des parties terminales ouvertes;
— des moyens de fixation de la dimension latérale du faisceau, coopérant avec les parties terminales
— et des éléments d'espacement, des éléments tubulaires définissant une région destinée à 1 à 600 trous (10) à travers lequels une partie des éléments tubulaires passent, le boitier entourant entièrement les éléments tubulaires, définissant une zone de passage de fluide autour du faisceau, comportant des moyens pour sa fixation de manière étanche aux moyens de fixation de la dimension latérale et ayant une longueur choisie et déterminée par la longueur du faisceau.

Caractérisé en ce que:

— le faisceau tubulaire (1) a une longueur supérieure de 0,5 à 5% à la longueur de la calandre;
— les éléments tubulaires de chaque faisceau (1) ont des longueurs diverses qui varient de 8,3 à 83,3 mm par mètre de longueur de faisceau;
— la torsion des éléments tubulaires est de 1 à 25° par 30 cm as longueur de faisceau, telle qu'on la mesure par l'angle de rotation des tubes d'une partie terminale du faisceau (1) relativement aux tubes de l'autre partie terminale;
— les éléments d'espacement (2, 3, 4, 5,) sont disposés à des intervalles de 15 à 75 cm et sont tournés de 45 à 315° relativement aux éléments d'espacement adjacents;
— et les éléments tubulaires passent à travers des trous prévus dans les éléments d'espacement circulaires (2, 3, 4, 5,) ayant une surface allant jusqu'à 80% de l'aire de section intérieure du boîtier et définissant une surface de 20% ou davantage de l'aire de section intérieure du boîtier définissant une ouverture (11) à travers laquelle passent une partie des éléments tubulaires, le nombre de tubes qui passent à travers chaque trou (10) ou à travers l'ouverture (11) variant de 1 à 100.

2. Echangeur thermique selon la revendication 1, dans lequel la torsion est de 6 à 15° par 30 cm de longueur de faisceau.

3. Echangeur thermique selon la revendication 1, dans lequel la rotation des éléments d'espacement est de 90 à 270°.

4. Echangeur thermique selon la revendication 1, dans lequel la rotation des éléments d'espacement est de 180°.

5. Echangeur thermique selon la revendication 1, muni d'éléments tubulaires en polymère échangeur d'ions fluoré.

6. Echangeur thermique selon la revendication 5, dans lequel le polymère échangeur d'ions fluoré contient des groupes sulfonyle.

7. Echangeur thermique selon la revendication 1, dans lequel la variation de longueur est de 5 à 15 mm par 30 cm de longueur de faisceau.

8. Echangeur thermique selon la revendication 1, dans lequel la longueur du faisceau de tubes est supérieure de 1 à 3% à la longueur du boîtier.

9. Echangeur thermique selon la revendication 1, dans lequel les éléments d'espacement sont disposés à intervalles de 46 à 61 cm.

10. Procédé d'échange thermique avec des fluides de températures différentes, utilisant l'appareil de la revendication 1.

**Patentansprüche**

1. Wärmeaustaucher mit

eine Gehäuse, das Einlaß- und Auslaßmittel aufweist;
einem länglichen Bündel einer Mehrzahl flexibler, relativ durchmesserkleiner, dünnwandiger, hohler, polymerer, röhrenförmiger Elemente, die in einer gedrehten Konfiguration angeordnet sind, sich über die Länge des Gehäuses erstrecken und offene Endbereiche aufweisen;

Mitteln zur Sicherstellung der seitlichen Abmessung des Bündels, die mit den Endbereichen zusammenwirken und

Abstandhaltern für die röhrenförmigen Elemente, die eine Fläche für 1 bis 600 Löcher (10) begrenzen, durch die ein Teil der röhrenförmigen Elemente verläuft,

wobei das Gehäuse die röhrenförmigen Elemente vollständig umgibt, eine Zone des Fluiddurchtritts um das Bündel herum begrenzt, Mittel aufweist zur eigenen Befestigung mit den Mitteln zur Sicherstellung des seitlichen Abstandes in fluiddichter Anordnung hiermit und eine Länge aufweist, die nach der Länge des Bündels ausgewählt und festgelegt ist;

dadurch gekennzeichnet, daß

das röhrenförmige Bündel (1) eine Länge aufweist, die 0,5 bis 5% größer als die Länge des Gehäuses ist;

die röhrenförmigen Elemente in jedem Bündel (1) von unterschiedlicher Länge sind, die um 8,3 bis 83,3 mm pro Meter Bündellänge schwankt;

die Drehung der röhrenförmigen Elemente 1 bis 25° je 30 cm Bündellänge beträgt, gemessen durch den Drehungswinkel, den die Röhren in dem einen Endbereich des Bündels (1) gegenüber den Röhren in dem anderen Endbereich aufweisen;

die Abstandhalter (2, 3, 4, 5) in Abständen von 15 bis 75 cm angeordnet sind und 45 bis 315° gegenüber den benachbarten Abstandhalter gedreht sind und

die röhrenförmigen Elemente durch Löcher in den kreisförmigen Abstandhaltern (2, 3, 4, 5) führen, die eine Fläche bis zu 80% der inneren Querschnittsfläche des Gehäuses aufweisen und eine Fläche von 20% oder mehr der inneren Querschnittsfläche des Gehäuses begrenzen, die eine Öffnung (11) festlegt, durch die ein Teil der röhrenförmigen Elemente verläuft, wobei die Anzahl der Röhren die durch jedes Loch (10) oder die Öffnung (11) verlaufen, zwischen 1 und 100 schwankt.

2. Die Wärmeaustauschervorrichtung nach Anspruch 1, wobei die Drehung 6 bis 15° je 30 cm Bündellänge beträgt.

3. Die Wärmeaustauschervorrichtung nach Anspruch 1, wobei die Drehung der Abstandhalter 90 bis 270° beträgt.

4. Die Wärmeaustauschervorrichtung nach Anspruch 1, wobei die Drehung der Abstandhalter 180° beträgt.

5. Die Wärmeaustauschervorrichtung nach Anspruch 1, mit röhrenförmigen Elementen aus fluoriertem Ionen-Austausch-Polymerem.

6. Die Wärmeaustauschervorrichtung nach Anspruch 5, wobei das fluorierte Ionen-Austausch-Polymere Sulfonylgruppen enthält.

7. Die Wärmeaustauschervorrichtung nach Anspruch 1, wobei die Schwankung in der Länge 5 bis 15 mm je 30 cm Bündellänge beträgt.

8. Die Wärmeaustauschervorrichtung nach Anspruch 1 wobei die Röhrenbündellänge 1 bis 3% größer ist als die Gehäuselänge.

9. Die Wärmeaustauschervorrichtung nach Anspruch 1, wobei die Abstandhalter in Abständen von 46 bis 61 cm angeordnet sind.

10. Verfahren zum Wärmeaustausch mit Fluiden unterschiedlicher Temperaturen unter Verwendung der Vorrichtung nach Anspruch 1.

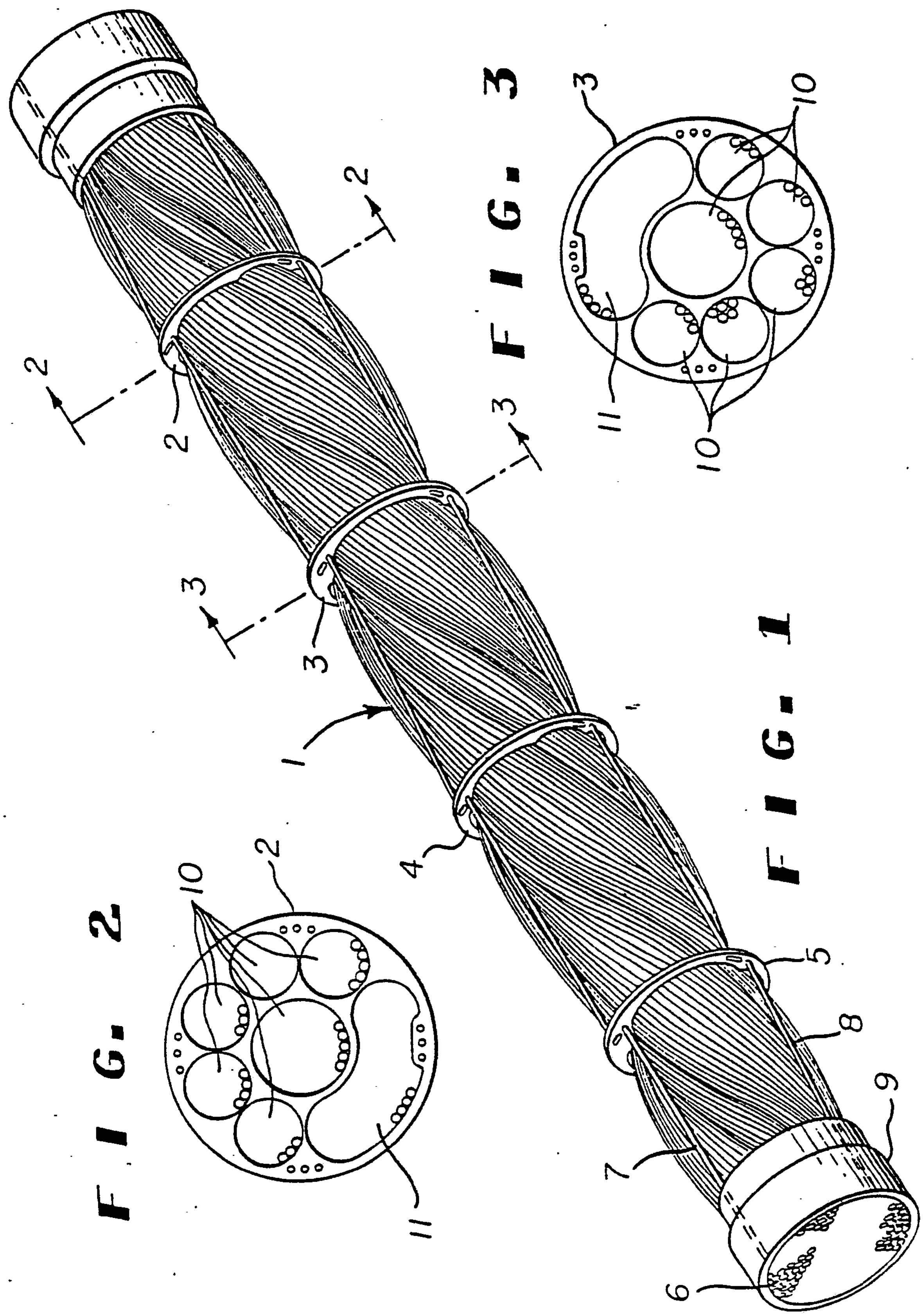


FIG. 1

FIG. 2

FIG. 3